# EUROPÄISCHE PATENTSCHRIFT

(11) **EP 3 253 466 B1**
(45) Veröffentlichungstag und Bekanntmachung des Hinweises auf die Patenterteilung: **18.11.2020**
(21) Anmeldenummer: 16703750.6
(22) Anmeldetag: 04.02.2016
(51) Int. Cl.: A63C 17/22, A63C 17/12, A63C 17/01

(54) **ANTRIEBSSYSTEM FÜR EIN MIT MUSKELKRAFT DIREKT ANTREIBBARES FAHRZEUG UND VERFAHREN ZUM WECHSELN EINER ROLLE EINES DERARTIGEN ANTRIEBSSYSTEMS**
DRIVE SYSTEM FOR A VEHICLE DRIVEABLE DIRECTLY BY MUSCLE FORCE AND METHOD FOR CHANGING A ROLLER OF SUCH A DRIVE SYSTEM
SYSTÈME D'ENTRAÎNEMENT POUR UN VÉHICULE À ENTRAÎNEMENT DIRECT PAR LA FORCE MUSCULAIRE ET PROCÉDÉ POUR CHANGER UN GALET D'UN TEL SYSTÈME D'ENTRAÎNEMENT

(30) Priorität: 05.02.2015 DE 102015101652
(43) Veröffentlichungstag der Anmeldung: 13.12.2017
(73) Patentinhaber: Mellow Boards GmbH, 20359 Hamburg (DE)
(72) Erfinder: GREEN, Kilian, 81245 München (DE)
(74) Vertreter: Soria Parra, Manuel
(86) Internationale Anmeldenummer: PCT/EP2016/052385
(87) Internationale Veröffentlichungsnummer: WO 2016/124689

(56) Entgegenhaltungen:
- WO-A1-2005/110558
- CN-A- 104 097 456
- US-A- 2 633 387
- US-A- 5 580 093
- US-A- 5 873 600
- US-A1- 2004 223 675
- US-A1- 2014 054 952
- US-A1- 2014 262 574
- US-A1- 2016 059 108

## Beschreibung

Die Erfindung betrifft ein Antriebssystem für ein mit Muskelkraft antreibbares Fahrzeug gemäß dem Oberbegriff des Patentanspruchs 1. Ferner betrifft die Erfindung ein mit Muskelkraft antreibbares Fahrzeug mit einem solchen Antriebssystem, ein Verfahren zum Wechseln einer Rolle eines solchen Antriebssystems sowie ein Herstellungsverfahren für eine Rolle des Antriebssystems. Ein Antriebssystem der eingangs genannten Art ist beispielsweise aus US 2014/0262574 A1 bekannt.

US 2014/0262574 A1 beschreibt ein Skateboard mit einer Achse, die ein Rad trägt, das einen Elektromotor umfasst. Der Elektromotor weist einen Stator und einen Rotor auf, wobei der Rotor um den Stator rotierbar ist und eine Rolle mit einer Lauffläche bildet. Mit diesem Skateboard können auch weniger sportliche Personen längere Strecken zurücklegen oder Steigungen überwinden. Nachteilig sind jedoch Belüftungsöffnungen in der Motorabdeckung, wodurch der Elektromotor anfällig für den Eintritt von Wasser und Schmutz ist.

DE 10 2009 036 924 A1 beschreibt ein Skateboard mit zwei Fahrachsen, wobei an den Fahrachsen jeweils Räder angeordnet sind. Innerhalb eines oder mehrerer Räder kann jeweils ein Elektromotor als Nabenmotor angeordnet sein. Auf diese Weise kann das Skateboard elektrisch angetrieben werden. Für die Energieversorgung des Nabenmotors ist ein Akkumulator oder eine Batterie vorgesehen, wobei der Akkumulator oder die Batterie in einer Weste oder einem Rucksack des Bedieners mitgeführt werden. Denkbar ist auch eine Anbringung des Akkumulators bzw. der Batterie am Skateboard selbst.

Der Betrieb eines solchen Skateboards mit einem Elektromotor erhöht wegen des Drehmoments, welches der Elektromotor auf das Rad aufbringt, den Verschleiß der Lauffläche des jeweiligen Rads. Wegen des im Rad integrierten Elektromotors ist der Austausch eines verschlissenen Rads aufwändig und birgt das Risiko, den Elektromotor zu beschädigen.

Die Aufgabe der Erfindung besteht darin, ein Antriebssystem für ein mit Muskelkraft antreibbares Fahrzeug, insbesondere für ein Skateboard, anzugeben, welches einfach handhabbar und leicht zu warten ist. Ferner ist es Aufgabe der Erfindung, ein mit Muskelkraft antreibbares Fahrzeug, insbesondere Skateboard, mit einem solchen Antriebssystem, und ein Verfahren zum Wechseln einer Rolle des Antriebssystems anzugeben.

Erfindungsgemäß wird diese Aufgabe im Hinblick auf das Antriebssystem durch den Gegenstand des Patentanspruchs 1, im Hinblick auf das Fahrzeug durch den Gegenstand des 14 und im Hinblick auf das Verfahren zum Wechseln einer Rolle eines Antriebssystems durch den Gegenstand des Patentanspruchs 15 gelöst.

Insbesondere wird die Aufgabe durch ein Antriebssystem für ein mit Muskelkraft direkt antreibbares Fahrzeug, insbesondere für ein Skateboard, gelöst, wobei das Fahrzeug wenigstens eine Achse und wenigstens ein Rad umfasst, das einen Elektromotor aufweist. Der Elektromotor kann einen Stator umfassen, der mit der Achse verbindbar ist. Ferner kann der Elektromotor einen Rotor aufweisen, der um den Stator rotierbar ist. Das Rad kann ferner eine Rolle aufweisen, die eine Lauffläche bildet. Die Rolle ist vorzugsweise mit dem Rotor auswechselbar verbunden oder verbindbar.

Die vorliegende Erfindung schlägt ein Antriebssystem für ein Fahrzeug vor, das mit Muskelkraft direkt antreibbar ist. Als direkt antreibbare Fahrzeuge im Sinne der vorliegenden Anmeldung werden insbesondere Fahrzeuge verstanden, die ohne ein Umlenkgetriebe ausgestattet sind, um die Muskelkraft eines Benutzers in Bewegungsenergie für das Fahrzeug umzuwandeln. Insbesondere werden als mit Muskelkraft direkt antreibbare Fahrzeuge Skateboards, Tretroller, Inline-Skates oder Rollerblades, Rollschuhe, Snakeboards oder Waveboards bezeichnet. Konkret bezeichnen die im Rahmen der Anmeldung genannten Fahrzeuge Sportgeräte, die durch Muskelkraft eines einzigen Benutzers in eine Vorwärts- oder Rückwärtsbewegung versetzt werden können, wobei die Sportgeräte gleichzeitig den jeweiligen Benutzer tragen können.

Bei der Erfindung weist das Antriebssystem eine auswechselbare Rolle auf. Das durch den Betrieb des Fahrzeugs hohem Verschleiß unterliegende Bauteil, nämlich die Rolle, welche die Lauffläche bildet, kann auf diese Weise einfach ausgewechselt werden. Andere Komponenten des Antriebssystems können hingegen weiter betrieben werden. Dies erleichtert die Wartung des Antriebssystems erheblich. Außerdem wird durch die auswechselbare Rolle erreicht, dass der Nutzer des Fahrzeugs je nach zu befahrendem Untergrund oder sportlichen Anforderungen unterschiedliche Rollen verwenden kann. So können insbesondere Rollen mit unterschiedlichen Materialzusammensetzungen oder Oberflächenstrukturen leicht ausgewechselt werden, um das Fahrzeug an unterschiedliche äußere Gegebenheiten anzupassen. Beispielsweise kann auf einfache Art und Weise eine Rolle gewählt werden, die für einen bestimmten Straßenbelag oder bestimmte Wetterverhältnisse besonders gut geeignet ist. Mit der Erfindung ist es also möglich, nur die tatsächlich einem Verschleiß unterliegenden Bauteile einfach und schnell auszuwechseln. Dies reduziert Folgekosten gegenüber anderen Systemen aus dem Stand der Technik, bei welchen die gesamte Antriebseinheit, insbesondere inklusive des Elektromotors, gewechselt werden muss.

Die Rolle ist vorzugsweise formschlüssig mit dem Rotor verbunden oder verbindbar. Damit ist sichergestellt, dass das auf den Rotor wirkende Drehmoment gut auf die Rolle übertragen wird. Dies verbessert die Stabilität der Rolle. So können Querkräfte, die in Kurvenfahrten auf die Rolle einwirken, gut abgeleitet werden. Eine solche Querstabilität ist insbesondere bei der Verwendung des Antriebssystems an Skateboards zweckmäßig, da diese oft für Kunststücke genutzt werden, bei welchen hohe Querkräfte auf die Räder einwirken.

Insbesondere kann die Rolle wenigstens ein Eingriffselement aufweisen. Das Eingriffselement greift vorzugsweise formschlüssig in ein Aufnahmeelement des Rotors ein. Der formschlüssige Eingriff mittels des Eingriffselements einerseits und des Aufnahmeelements andererseits ermöglicht eine einfache und schnelle Montage und Demontage der Rolle auf dem Rotor.

Das Eingriffselement kann in einer bevorzugten Ausführungsform durch eine mehreckige Innenumfangsfläche der Rolle gebildet sein. Das Aufnahmeelement ist vorzugsweise dazu komplementär ausgebildet, so dass ein formschlüssiger Eingriff zwischen Aufnahmeelement und Eingriffselement herstellbar ist. Insbesondere kann das Aufnahmeelement durch eine mehreckige Außenumfangsfläche gebildet sein. Die mehreckigen Innen- bzw. Außenflächen ermöglichen ein einfaches Aufschieben der Rolle auf den Rotor und bewirken im montierten Zustand einen Formschluss in Umfangsrichtung.

Erfindungsgemäß weist der Rotor eine Buchse mit einer Stirnplatte auf. Die Buchse kann eine im Wesentlichen zylinderförmige Umfangswandung umfassen, die längsaxial durch die Stirnplatte geschlossen ist. Die zylinderförmige Umfangswandung ist vorzugsweise durch einen Vieleckzylinder gebildet. Die Umfangswandung kann mit der Stirnplatte in einstückiger Weise die Buchse bilden.

Das Aufnahmeelement des Rotors kann durch eine Ausnehmung in der Stirnplatte der Buchse gebildet sein. Die Ausbildung einer Ausnehmung an der Buchse bzw. am Rotor, in die ein Eingriffselement der Rolle eingreifen kann, gewährleistet eine gute und stabile Verbindung zwischen der Rolle und dem Rotor. Insbesondere kann auf diese Weise sichergestellt werden, dass zwischen dem Eingriffselement und der Ausnehmung eine ausreichend große Kontaktfläche bereitgestellt ist. Dies verbessert die Stabilität der formschlüssigen Verbindung. Ein Drehmoment des Elektromotors kann so gut von dem Rotor auf die Rolle übertragen werden. Ferner ist so ermöglicht, die Rolle selbst vergleichsweise dünnwandig auszubilden, wodurch gleichzeitig der Elektromotor ausreichend groß dimensioniert werden kann, um eine geeignete Antriebsleistung zur Verfügung zu stellen.

Um einen möglichst großen Bauraum innerhalb des Rads für den Elektromotor bereitzustellen, ist es weiter vorteilhaft, wenn die Ausnehmung in einer Stirnplatte des Rotors ausgebildet ist. Das Eingriffselement kann dann ebenfalls stirnseitig an der Rolle angeordnet bzw. ausgebildet sein. Die Verbindungselemente zur Kopplung der Rolle mit dem Rotor tragen so nicht zum Gesamtdurchmesser des Rads bei, so dass der Bauraum innerhalb des Rads gut zur Anordnung des Elektromotors genutzt werden kann.

Bei dem erfindungsgemäßen Antriebssystem ist der Rotor mit einer Halteplatte verbunden, die die Rolle längsaxial fixiert. Dies trägt zur Querstabilität der Rolle bei und erleichtert das Auswechseln der Rolle.

Insbesondere kann das Eingriffselement in einem montierten Zustand der Rolle zwischen einer Rückfläche der Ausnehmung und der Halteplatte formschlüssig fixiert sein. Die Halteplatte kann zumindest stellenweise an einer Frontfläche der Stirnplatte anliegen, wobei zwischen einer Anlagefläche der Halteplatte und einer Rückfläche der Ausnehmung ein Abstand verbleibt, der im Wesentlichen einer Wandstärke des Eingriffselements entspricht. Die Anlagefläche kann beispielsweise im Bereich von Öffnungen angeordnet sein, die eine Schraubverbindung der Halteplatte mit der Stirnplatte des Rotors ermöglichen. Durch den engen Kontakt der Halteplatte mit der Stirnplatte ist gewährleistet, dass das Eingriffselement fest am Rotor fixiert, insbesondere in der Ausnehmung eingespannt, ist. Die Halteplatte kann insofern eine Spannfunktion aufweisen, die ein Verrutschen der Rolle, das zu einem unerwünschten Fahrverhalten führen kann, vermeidet.

Die Halteplatte kann ferner Belüftungsöffnungen aufweisen. So kann einer Überhitzung des Elektromotors vorgebeugt sein. Die Halteplatte rotiert im Betrieb gemeinsam mit dem Rotor. Damit ist sichergestellt, dass eine Luftströmung in die Belüftungsöffnungen eintritt. Die Belüftungsöffnungen sind vorzugsweise so angeordnet, dass sowohl ein Lufteintritt, als auch ein Luftaustritt ermöglicht ist. Im montierten Zustand können über die Belüftungsöffnungen Luftmassen durch die Halteplatte hindurch auf die Stirnplatte des Rotors geleitet werden. Die Stirnplatte kann weitere Belüftungsöffnungen aufweisen, so dass die Luftmassen in den Elektromotor geleitet werden. Auf diese Weise tragen die Belüftungsöffnungen zu einer Kühlung des Elektromotors bei.

In einer weiteren Ausführungsform kann vorgesehen sein, dass die Halteplatte einstückig mit der Rolle ausgebildet ist. In diesem Fall erfolgt die Verbindung der Rolle mit dem Rotor vorzugsweise über einen umfangsseitigen Formschluss. Insbesondere umfasst der Rotor eine mehreckige Außenumfangsfläche und die Rolle eine komplementär mehreckige Innenumfangsfläche, die im montierten Zustand der Rolle formschlüssig ineinandergreifen. Die Halteplatte bildet vorzugsweise eine längsaxiale Abschlussplatte der Rolle.

In einer weiteren bevorzugten Ausgestaltung der Erfindung ist vorgesehen, dass die Rolle einen Rollenkern aus einem ersten Material aufweist. Die Rolle kann außerdem eine Mantelschicht aus einem zweiten Material aufweisen. Die Mantelschicht ist vorzugsweise auf den Rollenkern aufgegossen. Durch das Aufgießen der Mantelschicht auf den Rollenkern wird eine feste, im Wesentlichen unlösbare Verbindung zwischen der Mantelschicht und dem Rollenkern hergestellt. Dies dient einer guten Drehmomentübertragung und vermeidet ein unerwünschtes Ablösen der Mantelschicht vom Rollenkern. Gleichzeitig kann durch die unterschiedlichen Materialien den verschiedenen Funktionen des Rollenkerns und der Mantelschicht Rechnung getragen werden. So dient der Rollenkern vorzugsweise der Fixierung der Rolle am Rotor des Elektromotors. Dazu kann der Rollenkern ein vergleichsweise hartes Material, beispielsweise einen duroplastischen Kunststoff aufweisen. Die Mantelschicht hat hingegen die Aufgabe, einen guten Kontakt zur Fahrbahn oder zum befahrenen Untergrund herzustellen. Insofern ist es vorteilhaft, wenn das Material der Mantelschicht gute Hafteigenschaften aufweist. Dies ist insbesondere bei vergleichsweise weichen Materialien, beispielsweise thermoplastischen Kunststoffen, gegeben. Insofern kann vorgesehen sein, dass die Mantelschicht, welche die Lauffläche der Rolle bildet, Polyurethan aufweist oder aus Polyurethan besteht.

In diesem Zusammenhang ist es denkbar, dass der Rollenkern auf einer Außenoberfläche eine Strukturierung aufweist. Die Strukturierung kann beispielsweise eine Noppenstruktur, eine Rillenstruktur oder eine Prägestruktur umfassen. Durch die Strukturierung wird die auf der Außenoberfläche des Rollenkerns zur Verfügung stehende Kontaktfläche vergrößert, so dass eine verbesserte Anhaftung des zweiten Materials, welches die Mantelschicht bildet, gewährleistet ist. Die Verbindung zwischen der Mantelschicht und dem Rollenkern wird so gestärkt.

Die Funktion des Rollenkerns, das Drehmoment vom Rotor auf die Rolle zu übertragen, wird besonders gut erfüllt, wenn das Eingriffselement, wie es in einer bevorzugten Ausgestaltung vorgesehen ist, einstückig mit dem Rollenkern ausgebildet ist. Die einstückige Ausbildung des Eingriffselements mit dem Rollenkern hat den weiteren Vorteil, dass ein standardisierter Rollenkern bereitgestellt werden kann, der, je nach Kundenanforderung, mit unterschiedlichen Mantelschichten versehen werden kann. Dies erleichtert die Serienproduktion einer auswechselbaren Rolle. Insbesondere kann eine hohe Stückzahl von Rollen gefertigt werden, wobei schnell und flexibel Rollen mit unterschiedlichen Abrolleigenschaften bereitgestellt werden können.

Bei dem erfindungsgemäßen Antriebssystem ist ferner in vorteilhaften Ausführungsformen vorgesehen, dass der Elektromotor mit einer Steuerung gekoppelt ist, die ein Telemetrie-Modul aufweist. Dies erweitert die Möglichkeiten zur Steuerung des Antriebssystems erheblich. Insbesondere kann mittels des Telemetrie-Moduls eine drahtlose Kommunikationsschnittstelle, beispielsweise mit einem Handsteuergerät oder einem Smartphone, hergestellt werden. Die Kommunikationsschnittstelle kann durch WLAN, Bluetooth, Zigbee oder andere drahtlose Funktechnologien gebildet sein. Insgesamt kann das Antriebssystem auf diese Weise fernsteuerbar sein, so dass auf ein Verbindungskabel zwischen einem Handsteuergerät und dem Antriebssystem verzichtet werden kann. Dies reduziert die Unfallgefahr bei der Benutzung eines Fahrzeugs, welches mit dem Antriebssystem ausgestattet ist.

Der Elektromotor kann ferner wenigstens einen Temperatursensor und/oder wenigstens einen Drehzahlsensor aufweisen, der mit der Steuerung signalverbunden oder signalverbindbar ist. Mittels des Temperatursensors und/oder des Drehzahlsensors ist eine Betriebsüberwachung des Elektromotors möglich. So kann die Steuerung dazu angepasst sein, bei Überschreiten einer bestimmten Maximaltemperatur eine Notabschaltung einzuleiten. Ferner kann mittels der Überwachung der Drehzahl des Elektromotors eine Geschwindigkeitsregelung, zumindest jedoch eine Geschwindigkeitsanzeige für den Benutzer, realisiert werden. Schließlich kann durch Überwachung der Drehzahl des Elektromotors, ggf. kombiniert mit der Überwachung der Stromaufnahme des Elektromotors, ein Betriebszustand des Fahrzeugs erfasst werden. Beispielsweise kann durch geeignete Auswertung der Sensordaten ermittelt werden, ob sich der Benutzer auf dem Fahrzeug befindet oder vom Fahrzeug abgestiegen ist. Die Steuerung kann außerdem dazu angepasst sein, eine Energiezufuhr zum Elektromotor zu unterbinden, sobald erkannt wird, dass ein Benutzer von dem Fahrzeug abgestiegen ist.

Der Elektromotor kann im Allgemeinen eine Verdrahtung aufweisen. Die Verdrahtung ist vorzugsweise so angepasst, dass der Elektromotor ein vergleichsweise hohes Drehmoment bereitstellt. Mit anderen Worten kann der Elektromotor drehmomentoptimiert sein. Dazu weist die Verdrahtung beispielsweise ein Wicklungsmuster auf, welches mehrpolig, insbesondere 12-polig, ist. Das Wicklungsmuster kann zwei Sternschaltungen aufweisen. Im Rahmen der Erfindung kann außerdem vorgesehen sein, dass die Verdrahtung mit einer Leiterplatte verbunden ist, wobei die Leiterplatte längsaxial innerhalb des Stators angeordnet ist. Dies trägt zu einem kompakten Aufbau des Antriebssystems bei. Außerdem wird auf diese Weise eine kompakte Unterbaugruppe des Antriebssystems, nämlich der Elektromotor mit Verdrahtung und Leiterplatte, bereitgestellt, die sich leicht austauschen lässt. Dies trägt zur Wartungsfreundlichkeit des Antriebssystems bei. Die Montage des Elektromotors am Antriebssystem wird ebenfalls erleichtert, da zur elektrischen Kontaktierung des Elektromotors mit beispielsweise einem Energiespeicher, lediglich eine einzige elektrische Steckverbindung mit der Leiterplatte herzustellen ist.

Das erfindungsgemäße Antriebssystem kann ferner eine Grundplatte aufweisen. Die Achse des Antriebssystems kann auf der Grundplatte gelagert sein. Vorzugsweise weist die Grundplatte einen Aufnahmebereich für einen Akkumulator auf. Die Grundplatte kann mit dem Fahrzeug, insbesondere mit einem Brett des Skateboards, schraubverbunden oder schraubverbindbar sein. Durch die Nutzung einer Grundplatte, die im Wesentlichen alle Komponenten des Antriebssystems trägt, wird ein kompaktes Antriebssystem bereitgestellt.

Die Achse kann auf der Grundplatte gelenkig gelagert sein. Eine solche Gestaltung ist insbesondere bei der Verwendung des Antriebssystems für ein Skateboard zweckmäßig, wobei die gelenkige Lagerung für die Kurvenfahrt des Skateboards genutzt werden kann.

Das Antriebssystem kann insgesamt zwei Räder mit jeweils einem Elektromotor aufweisen. Dabei können die Elektromotoren getrennt voneinander ansteuerbar sein, beispielsweise um Kurvenfahrten zu erleichtern. Ferner kann die Steuerung dazu angepasst sein, eine elektronische Differentialsperre einzustellen, so dass die Räder des Antriebssystems mit gleicher Drehzahl rotieren.

Ein nebengeordneter Aspekt der Erfindung betrifft ein mit Muskelkraft antreibbares Fahrzeug, insbesondere ein Skateboard, das wenigstens ein zuvor beschriebenes Antriebssystem aufweist. In diesem Zusammenhang wird darauf hingewiesen, dass der Begriff "Skateboard" im Rahmen der vorliegenden Anmeldung als Oberbegriff für alle Arten von Freizeitsportgeräten oder Fahrzeugen verwendet wird, die ein auf Rollen bewegbares Brett umfassen. Insbesondere umfasst der Begriff "Skateboard" in der vorliegenden Anmeldung auch Longboards, Streetboards, Snakeboards und/oder Waveboards.

Im Rahmen der vorliegenden Anmeldung wird außerdem ein Verfahren zum Wechseln einer Rolle eines zuvor beschriebenen Antriebssystems bzw. Fahrzeugs offenbart und beansprucht, wobei das Verfahren die folgenden Schritte aufweist:
- Lösen der Verbindung zwischen der Rolle und dem Rotor, insbesondere Lösen der Halteplatte;
- Entfernen der Rolle vom Rotor;
- formschlüssiges Verbinden einer neuen Rolle mit dem Rotor; und
- Fixieren der neuen Rolle am Rotor, insbesondere durch die Halteplatte.

Das erfindungsgemäße Verfahren zum Wechseln einer Rolle ist einfach und schnell durchführbar und reduziert so den Zeitaufwand für den Austausch einer Rolle, deren Lauffläche üblicherweise einem hohen Verschleiß unterliegt.

Ferner wird im Rahmen der vorliegenden Anmeldung ein Verfahren zum Herstellen einer Rolle für ein zuvor beschriebenes Antriebssystem und/oder Fahrzeug offenbart und beansprucht, wobei das Verfahren die folgenden Schritte aufweist:
- Bereitstellen eines Rollenkerns aus einem ersten Material;
- Einlegen des Rollenkerns in eine Form;
- Eingießen eines zweiten Materials zur Bildung einer Mantelschicht in die Form, wobei der Rollenkern zumindest bereichsweise umgossen wird; und
- Entnehmen der Rolle aus der Form.

Das Herstellungsverfahren ist flexibel und ermöglicht es, schnell auf unterschiedliche Anforderungen hinsichtlich der Abrolleigenschaften der zu produzierenden Rollen zu reagieren. Insbesondere kann so bei Verwendung standardisierter Rollenkerne schnell das Material für die Mantelschicht gewechselt werden. Dabei kann das Material für die Mantelschicht je nach Anforderungen hinsichtlich der Abrolleigenschaften der Rolle gewählt werden. Beispielsweise kann für die Nutzung der Rollen auf Asphalt ein anderes Material für die Mantelschicht gewählt werden als für die Nutzung der Rolle zum Abrollen auf Holz. Das erfindungsgemäße Verfahren ermöglicht einen schnellen Wechsel der Materialien und erhöht somit den Automatisierungsgrad in einer Serienproduktion. In einer bevorzugten Variante des Verfahrens ist zusätzlich vorgesehen, dass die Form mehrteilig, insbesondere zweiteilig, ausgebildet ist und zum Entnehmen der Rolle aus der Form geöffnet wird. Dies erleichtert die Handhabung und ermöglicht eine einfache Reinigung der Form.

Die Erfindung wird im Folgenden anhand eines Ausführungsbeispiels unter Bezugnahme auf die beigefügten, schematischen Zeichnungen näher erläutert. Darin zeigen:
- Fig. 1: eine perspektivische Explosionsdarstellung des Rads eines erfindungsgemäßen Antriebssystems nach einem bevorzugten Ausführungsbeispiel, wobei zur Veranschaulichung ein Teil der Mantelschicht der Rolle entfernt ist;
- Fig. 2: eine Seitenansicht des Rads gemäß Fig. 1;
- Fig. 3: eine Vorderansicht des Rads gemäß Fig. 1;
- Fig. 4: eine Rückansicht des Rads gemäß Fig. 1;
- Fig. 5: eine Querschnittsansicht durch das Rad gemäß Fig. 3 entlang der Linie A - A;
- Fig. 6: eine perspektivische Teilschnittansicht eines Rotors eines erfindungsgemäßen Antriebssystems nach einem weiteren bevorzugten Ausführungsbeispiel; und
- Fig. 7: eine perspektivische Teilschnittansicht eines Elektromotors eines erfindungsgemäßen Antriebssystems mit dem Rotor gemäß Fig. 6.

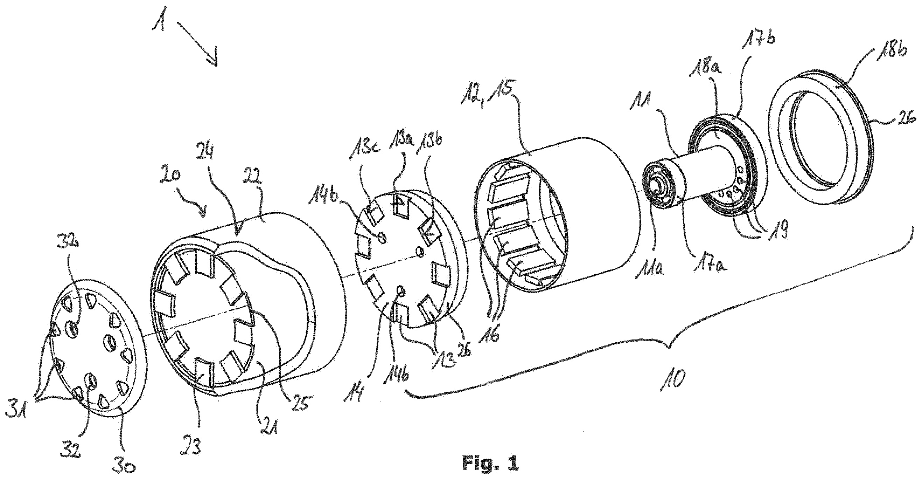

In den Figuren 1 bis 5 ist ein Rad gezeigt, welches vorzugsweise Teil eines Antriebssystems für ein Skateboard ist. Das Rad kann auch als Antriebssystem für Longboards, Streetboards, Snakeboards, Tretroller, Wakeboards oder Rollschuhe eingesetzt werden.

Das Rad 1 umfasst einen Elektromotor 10, der aus einem Stator 11 und einem Rotor 12 aufgebaut ist. Der Stator 11 ist vorzugsweise fest mit einer Achse des Antriebssystems verbindbar. Insbesondere kann der Stator 11 mit einer Achse verschraubt werden. Zur Fixierung des Stators 11 an der Achse des Antriebssystems wird vorzugsweise ein Schraubensicherungslack verwendet, der die Schraubverbindung zwischen Stator 11 und der Achse des Antriebssystems gegen ungewolltes Lösen sichert.

Der Rotor 12 ist gegenüber dem Stator 11 drehbar gelagert. Insbesondere sind ein Außenlager 17a und ein Innenlager 17b vorgesehen, die den Stator 11 mit dem Rotor 12 rotierbar verbinden. Das Außenlager 17a und das Innenlager 17b umfassen vorzugsweise jeweils ein Rillenkugellager. Die Rillenkugellager können gedichtet sein.

Der Rotor 12 weist eine Buchse 15 auf, in welcher mehrere Permanentmagnete 16 angeordnet sind. Die Permanentmagnete 16 sind vorzugsweise gleichmäßig über den Innenumfang der Buchse 15 verteilt und fest mit der Buchse 15 verbunden.

Der Rotor 12 umfasst ferner eine Stirnplatte 14, die die Buchse 15 stirnseitig verschließt. Die Stirnplatte 14 kann durch eine Presspassung in die Buchse 15 eingefügt sein. Rückseitig ist die Buchse 15 vorzugsweise durch einen Statorring 18a, das Innenlager 17b und einen Buchsenring 18b verschlossen. Insgesamt ist so ein gut gekapselter Elektromotor 10 gebildet, der vergleichsweise unempfindlich gegenüber Verschmutzung oder Flüssigkeitseinritt ist.

In diesem Zusammenhang wird darauf hingewiesen, dass aus Gründen der Übersichtlichkeit auf die Darstellung der Verdrahtung des Elektromotors 10, also die stromführenden Wicklungen zur Erzeugung des dynamischen Magnetfelds, verzichtet ist. Die Wicklungen sind vorzugsweise drehfest am Stator 11 angeordnet. Dabei sind die Wicklungen derart ausgebildet, dass der Elektromotor 10 ein vergleichsweise großes Drehmoment aufweist. Insgesamt ist der Elektromotor 10 drehmomentoptimiert ausgelegt, um eine ausreichende Antriebskraft aufzubringen. Dies ist insbesondere deshalb zweckmäßig, weil der Elektromotor 10 vorzugsweise getriebefrei als Direktantrieb konzipiert ist. Die Verdrahtung des Elektromotors 10 kann zu einer Leiterplatte zusammengeführt sein, die im Inneren des Stators 11 drehfest angeordnet ist. Dies erleichtert die Kontaktierung des Elektromotors 10 mit einem Energiespeicher, beispielsweise einem Akkumulator oder einer Batterie. Ein solcher Akkumulator kann beispielsweise auf einer Grundplatte angeordnet sein, wobei die Grundplatte zusätzlich die Achse trägt, an welcher der Elektromotor 10 bzw. das Rad 1 drehfest fixiert ist.

Das Rad 1 umfasst neben dem Elektromotor 10 außerdem eine Rolle 20. Die Rolle 20 ist aus einem Rollenkern 21 und einer Mantelschicht 22 aufgebaut. Dabei können der Rollenkern 21 und die Mantelschicht 22 unterschiedliche Materialien aufweisen. Die Mantelschicht 22 bildet auf ihre Außenumfangsfläche eine Lauffläche 24. Vorzugsweise ist die Mantelschicht 22 fest mit dem Rollenkern 21 vergossen. Zwischen dem Rollenkern 21 und der Mantelschicht 22 besteht folglich eine stoffschlüssige Verbindung, die sich durch eine besonders hohe Stabilität auszeichnet.

Wie in Fig. 1 gut erkennbar ist, weist der Rollenkern 21 Eingriffselemente 23 auf. Die Eingriffselemente 23 sind plattenartig ausgebildet und erstrecken sich radial zu einer Längsachse bzw. Rotationsachse des Rads 1. Jedes Eingriffselement 23 bildet insbesondere einen Fortsatz in Längsrichtung des Rollenkerns 21 bzw. steht über den Rollenkern 21 in Längrichtung über. So sind zwischen den Eingriffselementen 23 in Umfangsrichtung des Rollenkerns 21 beabstandet zueinander angeordnete Lücken 25 vorgesehen. Das Eingriffselement 23 weist eine im Wesentlichen rechteckige Außenkontur auf.

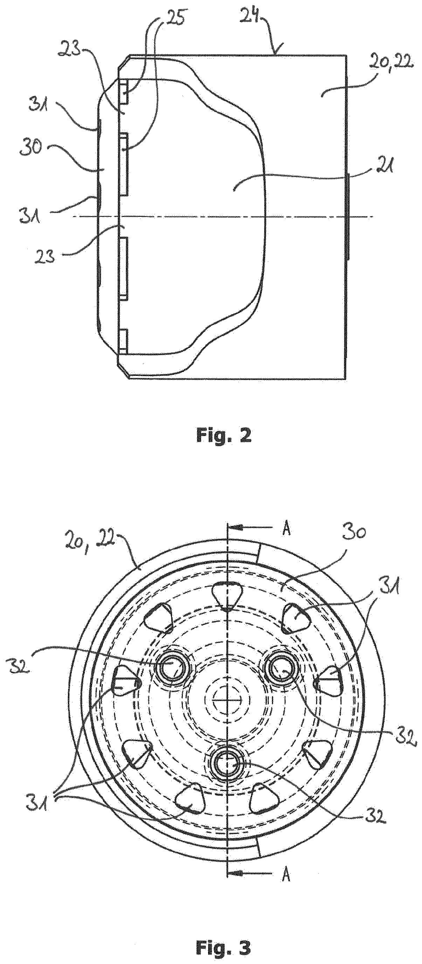

In Fig. 2 ist gut erkennbar, dass die Eingriffselemente 23 am Rollenkern 21 über einen zylinderförmigen Abschnitt des Rollenkerns 21 vorstehen. So sind zwischen den einzelnen Eingriffselementen 23 Lücken 25 gebildet, in denen das Material der Mantelschicht 22 beim Umgießen des Rollenkerns 21 einfließen kann. Damit wird zusätzlich zur stoffschlüssigen Verbindung zwischen der Mantelschicht 22 und dem Rollenkern 21 eine formschlüssige Verbindung realisiert. Es ist auch möglich, dass der Rollenkern 21 auf seiner Außenumfangsfläche eine Strukturierung, beispielsweise eine Rillenstruktur oder Noppenstruktur, aufweist, so dass beim Umgießen des Rollenkerns 21 mit der Mantelschicht 22 eine gute, insbesondere formschlüssige, Verbindung hergestellt wird.

Insgesamt sind mehrere Eingriffselemente 23 über den Umfang des Rollenkerns 21 verteilt angeordnet. Die Eingriffselemente 23 bilden im Wesentlichen eine Verzahnung, wobei die einzelnen Zähne bzw. Eingriffselemente 23 gleichmäßig zueinander beabstandet angeordnet sind.

Komplementär zu den Eingriffselementen 23 an der Rolle 20 bzw. am Rollenkern 21 sind an der Stirnplatte 14 Ausnehmungen 13 angeordnet. Insgesamt weist die Stirnplatte 14 stirnseitig mehrere Ausnehmungen 12 auf, die jeweils eine rechteckige Außenkontur zeigen. Eine andere Anzahl von Ausnehmungen 13 ist möglich. Die Ausnehmung 13 und das Eingriffselement 23 sind vorzugsweise derart dimensioniert, dass ein Eingriff des Eingriffselements 23 in die Ausnehmung 13 mit Spielpassung erfolgt.

Insbesondere weist die Ausnehmung 13 eine Rückfläche 13a, eine Bodenfläche 13b und zwei Seitenflächen 13c auf. Die Breite der Seitenflächen 13c entspricht im Wesentlichen der Wandstärke der Eingriffselemente 23.

Die Ausnehmung 13 erstreckt sich radial von einem Außenumfang der Stirnplatte 14 nach innen. Die Stirnplatte 14 kann einen Außendurchmesser aufweisen, der im Wesentlichen dem Innendurchmesser des Rollenkerns 21 entspricht. Dabei ist vorgesehen, dass der Rollenkern 21 mit Spielpassung über die Stirnplatte 14 geführt werden kann.

Zur Fixierung der formschlüssigen Verbindung zwischen der Rolle 20 und dem Rotor 12 ist eine Halteplatte 30 vorgesehen. Die Halteplatte 30 weist einen Außendurchmesser auf, der im Wesentlichen dem Außendurchmesser des Rollenkerns 21 entspricht. Es ist auch möglich, dass die Halteplatte 30 einen Außendurchmesser aufweist, der größer als der Außendurchmesser des Rollenkerns 21, aber kleiner als der Außendurchmesser der Mantelschicht 22 bzw. der Rolle 20 ist. Die Halteplatte 30 weist Befestigungsbohrungen 32 auf, die im montierten Zustand mit Gewindebohrungen 14b in der Stirnplatte 14 fluchten. Mittels der Befestigungsbohrungen 32 und der Gewindebohrungen 14b kann die Halteplatte 30 mit der Stirnplatte 14 verschraubt werden. Die Halteplatte 30 ist so drehfest mit der Stirnplatte 14 bzw. dem Rotor 12 gekoppelt.

Im montierten Zustand liegt die Halteplatte 30 zumindest stellenweise bündig an der Stirnplatte 14 an. Insbesondere ist vorgesehen, dass zwischen der Halteplatte 30 und der Rückfläche 13a der Ausnehmung 13 in der Stirnplatte 14 ein Abstand eingestellt ist, der im Wesentlichen der Wandstärke des Eingriffselements 23 entspricht. Das Eingriffselement 23 kann so zusätzlich zur formschlüssigen Verbindung kraftschlüssig zwischen die Stirnplatte 14 und die Halteplatte 30 gespannt werden. Dies verbessert die Verbindung zwischen der Rolle 20 und dem Elektromotor 10.

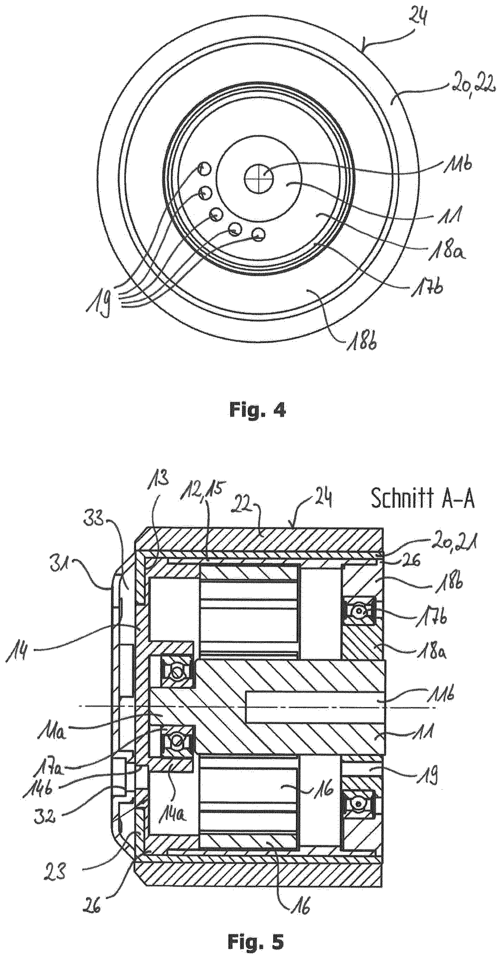

In Fig. 5 ist gut erkennbar, dass die Halteplatte 30 lediglich mit ihrem Außenrand und den Befestigungsbohrungen 32 bündig an der Stirnplatte 14 anliegt. Mit anderen Worten weist die Halteplatte 30 einen umgeformten Außenrand auf, so dass sich zwischen der Halteplatte 30 und der Stirnplatte 14 ein Belüftungsraum 33 bildet. In den Belüftungsraum 33 münden mehrere Belüftungsöffnungen 31, die in der Halteplatte 30 angeordnet sind. Die Belüftungsöffnungen 31 sind auf einer Kreislinie angeordnet und regelmäßig zueinander beabstandet. Bei dem dargestellten Ausführungsbeispiel sind neun Belüftungsöffnungen 31 vorgesehen.

Durch die Belüftungsöffnungen 31 wird hinter der Halteplatte 30 eine Luftströmung erzeugt, die zur Kühlung des Elektromotors 10 beiträgt. Die Luft gelangt dabei über die Belüftungsöffnungen 31 in den Belüftungsraum 33, der zwischen der Halteplatte 30 und der Stirnplatte 14 ausgebildet ist. Über dieselben Belüftungsöffnungen 31 kann die Luft den Belüftungsraum 33 wieder verlassen.

Innerhalb der Kreislinie, die durch die Belüftungsöffnungen 31 beschrieben wird, sind drei Befestigungsbohrungen 32 vorgesehen. Entsprechend weist die Stirnplatte 14 drei Gewindebohrungen 14b auf. Die Gewindebohrungen 14b und die Befestigungsbohrungen 32 sind zur Rotationsachse des Rads 1 jeweils mit dem gleichen Abstand angeordnet.

In Fig. 4 ist eine Rückansicht des Rads 1 zu sehen. Es ist erkennbar, dass der Stator 11 eine Axialbohrung 11b aufweist. Die Axialbohrung 11b kann ein Gewinde umfassen. Mittels der Axialbohrung 11b ist der Stator 11 bzw. insgesamt das Rad 1 auf einer Achse fixierbar. Ferner ist gut erkennbar, dass der Statorring 18a, der fest mit dem Stator 11 verbunden ist, mehrere Öffnungen aufweist. Jede Öffnung bildet einen Kabelauslass 19, so dass die zur elektrischen Kontaktierung des Stators 11 erforderlichen Kabel aus dem Elektromotor 10 geführt werden können. Da der Statorring 18a fest mit dem Stator 11 verbunden und somit drehfest zur Achse fixiert ist, bietet sich hier die Anordnung der Kabelauslässe 19 an. In den Kabelauslässen 19 kann auch ein Steckverbinder angeordnet sein. Im Allgemeinen kann die Verbindung zwischen dem Elektromotor 10 und einer Steuerung durch zwei oder mehrere steckverbindbare Kabelstränge gebildet sein. Wenigstens eine Steckverbindung kann in den Kabelauslässen 19 angeordnet sein, so dass eine einfache elektrische Konnektierung oder Diskonnektierung unmittelbar am Elektromotor 10 ermöglicht ist.

Um den Statorring 18a erstreckt sich das Innenlager 17b, das als Rillenkugellager ausgebildet sein kann. Zur Abdichtung des Elektromotors 10 ist ferner der Buchsenring 19b vorgesehen, der fest mit der Buchse 15 des Rotors 12 verbunden ist. Insbesondere kann der Buchsenring 18b durch eine Presspassung mit der Buchse 15 verbunden sein.

Eine detaillierte Darstellung des inneren Aufbaus des Rads 1 zeigt Fig. 5. Insbesondere ist die Axialbohrung 11b des Stators 11 gut erkennbar. Die Axialbohrung 11b dient zur Verbindung mit der Achse des Antriebssystems. Ferner umfasst der Stator 11 einen Zapfen 11a, der längsaxial über den Stator 11 hervorsteht. Der Zapfen 11a trägt das Außenlager 17a, das als Rillenkugellager ausgebildet sein kann. Das Außenlager 17a ist in einen Ringfortsatz 14a der Stirnplatte 14 eingepasst.

In Fig. 5 ist ebenfalls gut erkennbar, dass sowohl die Stirnplatte 14, als auch der Buchsenring 18b jeweils einen radialen Flansch 26 aufweisen, der über die Buchse 15 hervorsteht. So wird ein Eindringen von Schmutz oder Staub in den Elektromotor 10 vermieden.

Schließlich zeigt Fig. 5 deutlich, dass die Rolle 20 zweiteilig aufgebaut ist. Insbesondere ist der Rollenkern 21 erkennbar, der Eingriffselemente 23 zur formschlüssigen Verbindung der Rolle 20 mit Rotor 12 des Elektromotors 10 aufweist. Ferner umfasst die Rolle 20 eine Mantelschicht 22, die mit dem Rollenkern 21 insbesondere stoffschlüssig verbunden ist. Die Mantelschicht 22 kann aus Polyurethan gebildet sein, was sich durch gute Hafteigenschaften auszeichnet. Die Mantelschicht 22 bildet die Lauffläche 24 der Rolle 20.

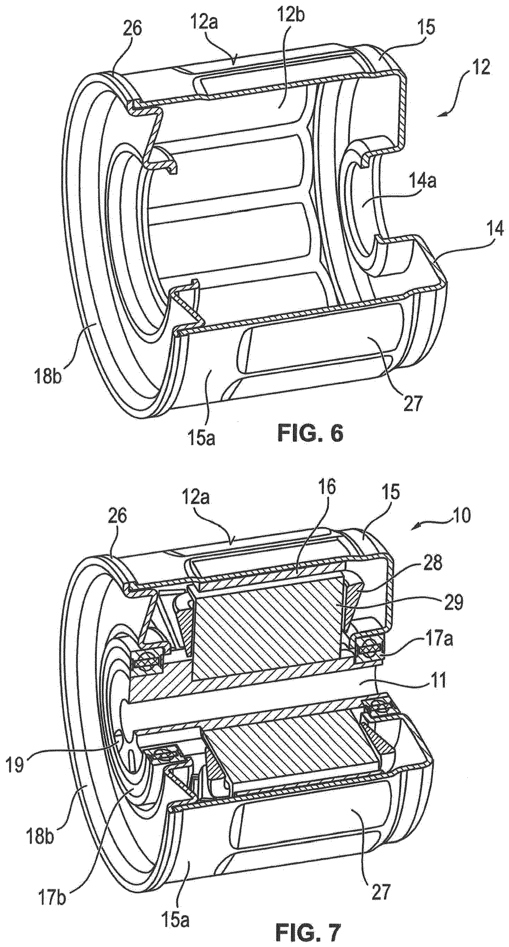

In den Fig. 6 und 7 ist ein alternatives Ausführungsbeispiel des Antriebssystems gezeigt, wobei insbesondere der Aufbau des Elektromotors 10 dargestellt ist. Fig. 6 zeigt den Rotor 12 des Elektromotors 10 in einer perspektivischen Teilschnittansicht. Der Rotor umfasst eine Buchse 15, die eine im Wesentlichen zylinderförmige Umfangswandung 15a und eine einstückig mit der Umfangswandung 15a ausgebildete Stirnplatte 14 umfasst. Die Stirnplatte 14 schließt die Buchse 15 nach außen ab. Mit anderen Worten ist die Stirnplatte 14 im montierten Zustand des Rotors 12 auf einer Achse zur längsaxialen Außenseite der Achse ausgerichtet. In der Stirnplatte 14 ist ein Ringfortsatz 14a ausgebildet, der ein Kugellager aufnehmen kann.

Die Buchse 15 mit der Stirnplatte 14 ist vorzugsweise als einstückiges Tiefziehteil gebildet. Damit lässt sich der Rotor 12 besonders einfach herstellen. Auf der der Stirnplatte 14 gegenüberliegenden Seite ist ein Buchsenring 18b vorgesehen, der die Buchse 15 im montierten Zustand des Rotors 12 auf einer Achse zur Innenseite abschließt. Im Bereich des Buchsenrings 18b weist der Rotor 12, insbesondere die Buchse 15, einen radialen Flansch 26 auf, der als Anschlag für eine Rolle 20 dient.

Die Umfangswandung 15a des Rotors 12 ist im Wesentlichen zylinderförmig ausgebildet und umfasst zumindest abschnittsweise ein mehreckiges Außenprofil. Mit anderen Worten weist der Rotor 12 bzw. die Buchse 15 eine mehreckige Außenumfangsfläche 12a auf. Die Außenumfangsfläche 12a bildet ein Aufnahmeelement 27 zum formschlüssigen Eingriff eines komplementär ausgebildeten Eingriffselements 23 der Rolle 20. Konkret ist vorgesehen, dass die auswechselbare Rolle 20 eine Innenumfangsfläche aufweist, die ebenfalls mehreckig ausgebildet ist. Dabei können insbesondere mehrere abgeflachte Umfangswandungsabschnitte vorgesehen sein, die im montierten Zustand der Rolle 20 auf dem Rotor 12 formschlüssig ineinandergreifen, wobei der Formschluss insbesondere in Umfangsrichtung gebildet ist. Wie in Fig. 6 gut erkennbar ist, ist die Umfangswandung 15a auf der Innenseite ebenfalls mit flachen bzw. abgeflachten Flächen versehen. Diese abgeflachten Flächen bilden Magnetaufnahmen 12b, so dass auf der Innenumfangsfläche des Rotors 12 flache bzw. ungekrümmte Permanentmagnete 16 einfach eingeklebt werden können. Die abgeflachten Bereiche der Umfangswandung 15a weisen insofern eine Doppelfunktion auf. Zur Außenumfangsfläche 12a hin ermöglichen die abgeflachten Bereiche die formschlüssige Verbindung mit einer auswechselbaren Rolle 20. Zur Innenumfangsfläche hin bilden die abgeflachten Bereiche Magnetaufnahmen 12b zur einfachen und sicheren Aufnahme von Permanentmagneten 16.

Die Rolle 20, die mit dem Rotor 12 formschlüssig in Umfangsrichtung durch die mehreckige Außenkontur der Buchse 15 fixiert ist, kann in längsaxialer Richtung beispielsweise durch eine Verschraubung mit der Stirnplatte 14 des Rotors 12 verbunden sein. Insofern können an der Stirnplatte 14 hier nicht dargestellte Bohrungen, insbesondere Gewindebohrungen, vorgesehen sein, um die auswechselbare Rolle mit einer Halteplatte 30 am Rotor 12 zu fixieren. Dabei kann vorgesehen sein, dass die Halteplatte 30 einstückig mit der Rolle 20, insbesondere dem Rollenkern 21, ausgebildet ist. Mit anderen Worten kann zumindest der Rollenkern 21 ebenfalls als Tiefziehteil mit einer integral ausgebildeten Halteplatte 30 gebildet sein. Die einstückig mit dem Rollenkern 21 ausgebildete Halteplatte 30 weist vorzugsweise ebenfalls Bohrungen auf, die mit den Bohrungen bzw. Gewindebohrungen in der Stirnplatte 14 des Rotors 12 fluchten, so dass eine Schraubverbindung zwischen Rollenkern 21 und Rotor 12 ermöglicht ist.

In Fig. 7 ist eine perspektivische Teilschnittdarstellung des Elektromotors 10 gezeigt, der einen Rotor 12 gemäß Fig. 6 aufweist. Es ist erkennbar, dass die Permanentmagnete 16 in den Magnetaufnahmen 12b angeordnet, insbesondere dort eingeklebt, sind. Der Stator 11 weist an einem inneren Axialende des Rotors 12 Kabelauslässe 19 auf. Am inneren Axialende ist der Rotor 12 über ein Innenlager 17b, das als Kugellager ausgebildet ist, drehbar gegenüber dem Buchsenring 18b gelagert. An einem äußeren Axialende des Rotors 12 erfolgt die Lagerung des Stators 11 über ein Außenlager 17, das in den Ringfortsatz 14a des Rotors 12 eingesetzt, insbesondere eingepresst, ist. Der Stator umfasst ferner Wicklungskerne 29, die sich radial von der Längsachse des Stators 11 nach außen erstrecken und Wicklungen 28 tragen.

Im Allgemeinen ist bei dem Antriebssystem vorgesehen, dass der Elektromotor 10, insbesondere die Buchse 15, einen Außendurchmesser aufweist, der höchstens 80 mm, insbesondere höchstens 70 mm, insbesondere höchstens 65 mm, insbesondere 63 mm, beträgt. So ist sichergestellt, dass das Rad 1 mit der Rolle 20 insgesamt einen Durchmesser aufweist, der im Wesentlichen handelsüblichen Skateboardrollen entspricht. Damit ist ein einfaches Nachrüsten von bestehenden Skateboards o.ä. Sportgeräten einfach möglich.

Die Länge des Rads 1 beträgt vorzugsweise höchstens 75 mm, insbesondere höchstens 72 mm, insbesondere höchstens 70 mm. Dieses Format erleichtert ebenfalls die Nachrüsten an bestehenden Skateboards.

Das gesamte Antriebssystem kann zusätzlich ein Telemetriemodul umfassen, so dass der Elektromotor 10 fernsteuerbar ist. Beispielsweise kann ein Benutzer über sein Smartphone und eine WLAN-, Bluetooth- oder Zigbee-Verbindung den Elektromotor steuern. Ferner kann der Elektromotor 10 so angepasst sein, dass ein rekuperatives Bremsen ermöglicht ist. Der Elektromotor 10 kann also auch als Generator wirken, wobei Bremsenergie in elektrische Energie umgewandelt und in einen Energiespeicher, beispielsweise einen Akkumulator, zurückgeführt wird. Dies erhöht die Reichweite des Antriebssystems.

### Bezugszeichenliste

- 1: Rad
- 10: Elektromotor
- 11: Stator
- 11a: Zapfen
- 11b: Axialbohrung
- 12: Rotor
- 12a: Außenumfangsfläche
- 12b: Magnetaufnahme
- 13: Ausnehmung
- 13a: Rückfläche
- 13b: Bodenfläche
- 13c: Seitenfläche
- 14: Stirnplatte
- 14a: Ringfortsatz
- 14b: Gewindebohrung
- 15: Buchse
- 15a: Umfangswandung
- 16: Permanentmagnet
- 17a: Außenlager
- 17b: Innenlager
- 18a: Statorring
- 18b: Buchsenring
- 19: Kabelauslass
- 20: Rolle
- 21: Rollenkern
- 22: Mantelschicht
- 23: Eingriffselement
- 24: Lauffläche
- 25: Lücke
- 26: radialer Flansch
- 27: Aufnahmeelement
- 28: Wicklung
- 29: Wicklungskern
- 30: Halteplatte
- 31: Belüftungsöffnung
- 32: Befestigungsbohrung
- 33: Belüftungsraum

## Patentansprüche

1. Antriebssystem für ein mit Muskelkraft antreibbares Fahrzeug, insbesondere für ein Skateboard, mit wenigstens einer Achse und wenigstens einem Rad (1), das einen Elektromotor (10) aufweist, wobei der Elektromotor (10) einen Stator (11), der mit der Achse verbindbar ist, und einen Rotor (12), der um den Stator (11) rotierbar ist, umfasst und das Rad (1) eine Rolle (20) aufweist, die eine Lauffläche (24) bildet,
**dadurch gekennzeichnet, dass**
die Rolle (20) mit dem Rotor (12) auswechselbar verbunden ist und der Rotor eine Buchse (15) mit einer Stirnplatte (14) aufweist, wobei der Rotor (12) mit einer Halteplatte (30) verbunden ist, die mit der Stirnplatte (14) drehfest verbunden ist und die Rolle (20) längsaxial fixiert.

2. Antriebssystem nach Anspruch 1,
**dadurch gekennzeichnet, dass**
die Rolle (20) formschlüssig mit dem Rotor (12) verbunden oder verbindbar ist.

3. Antriebssystem nach Anspruch 1 oder 2, **dadurch gekennzeichnet, dass** die Rolle (20) wenigstens ein Eingriffselement (23) aufweist, das in ein Aufnahmeelement (27) des Rotors (12) formschlüssig eingreift.

4. Antriebssystem nach Anspruch 3, **dadurch gekennzeichnet, dass** das Eingriffselement (23) durch eine mehreckige Innenumfangsfläche der Rolle (20) und das Aufnahmeelement (27) durch eine mehreckige Außenumfangsfläche (12a) des Rotors (12) gebildet sind und/oder dass das Eingriffselement (23) in einen montierten Zustand der Rolle (20) zwischen einer Rückfläche (13a) der Ausnehmung (13) und der Halteplatte (30) formschlüssig fixiert ist.

5. Antriebssystem nach Anspruch 3 oder 4, **dadurch gekennzeichnet, dass** das Aufnahmeelement (27) durch eine Ausnehmung (13) in der Stirnplatte (14) der Buchse (15) gebildet ist.

6. Antriebssystem nach einem der vorhergehenden Ansprüche,
**dadurch gekennzeichnet, dass**
die Halteplatte (30) Belüftungsöffnungen (31) aufweist.

7. Antriebssystem nach einem der vorhergehenden Ansprüche,
**dadurch gekennzeichnet, dass**
die Rolle (20) einen Rollenkern (21) aus einem ersten Material und eine Mantelschicht (22) aus einem zweiten Material aufweist, wobei die Mantelschicht (22) auf den Rollenkern (21) aufgegossen ist.

8. Antriebssystem nach einem der Ansprüche 3 bis 5,
**dadurch gekennzeichnet, dass**
das Eingriffselement (23) einstückig mit dem Rollenkern (21) ausgebildet ist.

9. Antriebssystem nach einem der vorhergehenden Ansprüche,
**dadurch gekennzeichnet, dass**
der Elektromotor (10) mit einer Steuerung gekoppelt ist, die ein Telemetrie-Modul aufweist und/oder dass
der Elektromotor (10) einen Temperatursensor und/oder Drehzahlsensor aufweist, der mit der Steuerung signalverbunden oder signalverbindbar ist.

10. Antriebssystem nach einem der vorhergehenden Ansprüche,
**dadurch gekennzeichnet, dass**
der Elektromotor (10) eine Verdrahtung aufweist, die mit einer Leiterplatte verbunden ist, wobei die Leiterplatte längsaxial innerhalb des Stators (11) angeordnet ist.

11. Antriebssystem nach einem der vorhergehenden Ansprüche,
**dadurch gekennzeichnet, dass**
die Halteplatte (30) Befestigungsbohrungen (32) aufweist, die im montierten Zustand mit Gewindebohrungen (14b) in der Stirnplatte (14) fluchten.

12. Antriebssystem nach einem der vorhergehenden Ansprüche,
**dadurch gekennzeichnet, dass**
die Halteplatte (30) im montierten Zustand zumindest stellenweise bündig an der Stirnplatte (14) anliegt.

13. Antriebssystem nach einem der vorhergehenden Ansprüche,
**dadurch gekennzeichnet, dass**
die Buchse (15) eine zylinderförmige Umfangswandung (15a) aufweist, mit der die Stirnplatte (14) einstückig ausgebildet ist.

14. Mit Muskelkraft antreibbares Fahrzeug, insbesondere Skateboard, mit mindestens einem Antriebssystem nach einem der vorhergehenden Ansprüche.

15. Verfahren zum Wechseln einer Rolle (20) eines Antriebssystems oder eines Fahrzeugs nach einem der vorhergehenden Ansprüche, wobei das Verfahren folgende Schritte aufweist:
- Lösen der Halteplatte (30);
- Entfernen der Rolle (20) vom Rotor (12);
- formschlüssiges Verbinden einer neuen Rolle (20) mit dem Rotor (12); und
- Fixieren der neuen Rolle (20) am Rotor (12) durch die Halteplatte (30).

## Claims

1. A drive system for a vehicle driveable by muscle force, in particular a skateboard, with at least one axle and at least one wheel (1), having an electric motor (10), wherein the electric motor (10) comprises a stator (11) connectable to the axle and a rotor (12) rotatable around the stator (11), and the wheel (1) comprises a roller (20) which forms a running surface (24),
**characterized in that**
the roller (20) is replaceably connected to the rotor (12) and the rotor comprises a bushing (15) with a front plate (14), wherein
the rotor (12) is connected to a retaining plate (30) non-rotatably coupled to the front plate (14) and the roller (20) is fixed along a longitudinal axis.

2. The drive system according to claim 1,
**characterized in that**
the roller (20) is positively connected or connectable to the rotor (12).

3. The drive system according to claim 1 or 2, **characterized in that**
the roller (20) comprises at least one engaging element (23) which positively engages into a receiving element (27) of the rotor (12).

4. The drive system according to claim 3, **characterized in that** the engaging element (23) is formed by a polygonal inner circumferential surface of the roller (20) and the receiving element (27) is formed by a polygonal outer circumferential surface (12a) of the rotor (12) and/or that the engaging element (23) is positively fixed between a rear surface (13a) of the recess (13) and the retaining plate (30) in an assembled state of the roller (20).

5. The drive system according to claim 3 or 4, **characterized in that**
the receiving element (27) is formed by a recess (13) in the front plate (14) of the bushing (15).

6. The drive system according to one of the preceding claims,
**characterized in that**
the retaining plate (30) comprises ventilation openings (31).

7. The drive system according to one of the preceding claims,
**characterized in that**
the roller (20) has a roller core (21) made of a first material and a jacket layer (22) made of a second material, wherein the jacket layer (22) is cast onto the roller core (21).

8. The drive system according to one of claims 3 to 5,
**characterized in that**
the engaging element (23) is integrally formed with the roller core (21).

9. The drive system according to one of the preceding claims,
**characterized in that**
the electric motor (10) is coupled to a controller comprising a telemetry module and/or that
the electric motor (10) comprises a temperature sensor and/or rotational speed sensor which is signal-connected or signal-connectable to the controller.

10. The drive system according to one of the preceding claims,
**characterized in that**
the electric motor (10) comprises wiring connected to a circuit board, wherein the circuit board is arranged inside of the stator (11) along a longitudinal axis.

11. The drive system according to one of the preceding claims,
**characterized in that**
the retaining plate (30) comprises mounting holes (32) which align flush with threaded holes (14b) in the front plate (14) in the assembled state.

12. The drive system according to one of the preceding claims,
**characterized in that**
at least a part of the retaining plate (30) abuts flush against the front plate (14) in the assembled state.

13. The drive system according to one of the preceding claims,
**characterized in that**
the bushing (15) exhibits a cylindrical circumferential wall (15a) with which the front plate (14) is integrally formed.

14. A vehicle drivable by muscle force, in particular a skateboard, having at least one drive system according to one of the preceding claims.

15. A method for changing a roller (20) of a drive system or a vehicle according to one of the preceding claims, wherein the method comprises the following steps:
- releasing the retaining plate (30);
- removing the roller (20) from the rotor (12);
- positively connecting a new roller (20) to the rotor (12); and
- fixing the new roller (20) to the rotor (12) via the retaining plate (30).

## Revendications

1. Système d'entraînement pour un véhicule susceptible d'être entraîné par la force musculaire, en particulier pour une planche à roulettes (skateboard), comportant au moins un axe et au moins une roue (1) pourvue d'un moteur électrique (10), le moteur électrique (10) comprenant un stator (11) qui peut être relié à l'axe et un rotor (12) qui peut tourner autour du stator (11), et la roue (1) comprenant une roulette (20) qui forme une surface de roulement (24),
**caractérisé en ce que**
la roulette (20) est reliée de manière interchangeable au rotor (12), et
le rotor comprend une douille (15) ayant une plaque frontale (14), le rotor (12) étant relié à une plaque de maintien (30) qui est reliée solidairement en rotation à la plaque frontale (14) et qui fixe la roulette (20) longitudinalement et axialement.

2. Système d'entraînement selon la revendication 1,
**caractérisé en ce que**
la roulette (20) est reliée ou est susceptible d'être reliée par coopération de forme au rotor (12).

3. Système d'entraînement selon la revendication 1 ou 2,
**caractérisé en ce que**
la roulette (20) comprend au moins un élément d'engagement (23) qui s'engage par coopération de forme dans un élément de réception (27) du rotor (12).

4. Système d'entraînement selon la revendication 3,
**caractérisé en ce que**
l'élément d'engagement (23) est formé par une surface circonférentielle intérieure polygonale de la roulette (20), et l'élément de réception (27) est formé par une surface circonférentielle extérieure polygonale (12a) du rotor (12), et/ou **en ce que** l'élément d'engagement (23) est fixé par coopération de forme entre une surface arrière (13a) de l'évidement (13) et la plaque de maintien (30), dans un état assemblé de la roulette (20).

5. Système d'entraînement selon la revendication 3 ou 4,
**caractérisé en ce que**
l'élément de réception (27) est formé par un évidement (13) dans la plaque frontale (14) de la douille (15).

6. Système d'entraînement selon l'une des revendications précédentes,
**caractérisé en ce que**
la plaque de maintien (30) présente des ouvertures de ventilation (31).

7. Système d'entraînement selon l'une des revendications précédentes,
**caractérisé en ce que**
la roulette (20) comprend un noyau de roulette (21) en un premier matériau et une couche enveloppe (22) en un second matériau, la couche enveloppe (22) étant coulée sur le noyau de roulette (21).

8. Système d'entraînement selon l'une des revendications 3 à 5,
**caractérisé en ce que**
l'élément d'engagement (23) est réalisé d'un seul tenant avec le noyau de roulette (21).

9. Système d'entraînement selon l'une des revendications précédentes,
**caractérisé en ce que**
le moteur électrique (10) est couplé à une unité de commande qui comprend un module de télémétrie, et/ou **en ce que**
le moteur électrique (10) comprend un capteur de température et/ou un capteur de vitesse de rotation qui est relié par signal ou peut être relié par signal à l'unité de commande.

10. Système d'entraînement selon l'une des revendications précédentes,
**caractérisé en ce que**
le moteur électrique (10) présente un câblage connecté à une carte à circuit, la carte à circuit étant disposée longitudinalement et axialement à l'intérieur du stator (11).

11. Système d'entraînement selon l'une des revendications précédentes,
**caractérisé en ce que**
la plaque de maintien (30) présente des perçages de fixation (32) qui, dans l'état assemblé, sont en alignement avec des perçages taraudés (14b) dans la plaque frontale (14).

12. Système d'entraînement selon l'une des revendications précédentes,
**caractérisé en ce que**
dans l'état assemblé, la plaque de maintien (30) s'appuie au moins localement en affleurement contre la plaque frontale (14).

13. Système d'entraînement selon l'une des revendications précédentes,
**caractérisé en ce que**
la douille (15) présente une paroi circonférentielle cylindrique (15a) avec laquelle la plaque frontale (14) est réalisée d'un seul tenant.

14. Véhicule, en particulier planche à roulettes (skateboard), pouvant être entraîné(e) par la force musculaire, comportant au moins un système d'entraînement selon l'une des revendications précédentes.

15. Procédé pour changer une roulette (20) d'un système d'entraînement ou d'un véhicule selon l'une des revendications précédentes, le procédé comprenant les étapes suivantes consistant à :
- désolidariser la plaque de maintien (30) ;
- enlever la roulette (20) du rotor (12) ;
- relier par coopération de forme une nouvelle roulette (20) au rotor (12) ; et
- fixer la nouvelle roulette (20) au rotor (12) par l'intermédiaire de la plaque de maintien (30).
